# EUROPEAN PATENT APPLICATION

(11) **EP 0 720 087 A1**
(43) Date of publication of application: **03.07.1996**
(21) Application number: 95119950.4
(22) Date of filing: 18.12.1995
(51) Int. Cl.: G06F 7/00, G06F 11/00

(54) **Apparatus and method for a memory extension stack in a data processing system**

(30) Priority: 27.12.1994 US 363850
(71) Applicant: MOTOROLA, INC., Schaumburg, IL 60196 (US)
(72) Inventor: Marino, Paul, Cfar-Saba (IL); Rozenshein, Zvika, Cfar-Saba (IL); Sixou, Philippe, Pisgat Ze'ev Mizrach, Jerusalem (IL); Hass, David, Savion (IL); Ben-Sinai, Elkana, Ramat-Gan (IL)
(74) Representative: Spaulding, Sarah Jane

(57) **Abstract**

A memory extension stack (80) is formed within a selected random access memory location in a data processing system (20) when a memory extension stack (80) is enabled and a hardware stack (71) is almost full. When the hardware stack (71) is almost full, an entry from a bottom of the hardware stack (71) is moved to the memory extension stack (80) by inserting a move instruction into a program being executed in the hardware stack (71). When the hardware stack (71) is almost empty, an entry from the memory extension stack (80) is moved to the bottom of the hardware stack (71) by inserting a move instruction into the program. The move instruction is inserted automatically into the program. The memory extension stack (80) extends the effective size of the hardware stack (71) and keeps a program running within the hardware stack (71) for increased speed.

## Description

### Field of the Invention

This invention relates generally to data processing systems, and more particularly, to an apparatus and a method for implementing a memory extension stack in a data processing system.

### Background of the Invention

Digital signal processing is the arithmetic processing of read-time signals sampled at regular intervals and digitized. A digital signal processor (DSP) performs digital signal processing functions such as filtering, mixing, and comparison of signals. In some data processing systems, a DSP may be included with a host processor to deal with the digital signal processing chores. A host processor may include, for example, a microcomputer or a microprocessor.

A commonly used instruction in digital signal processing is a DO instruction. A DO instruction is a loop instruction that repeatedly executes predetermined instructions for a predetermined number of times. In a DSP, a DO instruction may be implemented in hardware. There may also be nested DO loops, or DO loops within DO loops. In a DSP, it is important that instructions be executed as rapidly as possible. To execute instructions quickly, some data processing systems will first load the instruction operands into a hardware stack, or last in, first out (LIFO) memory. Stacks are commonly used in data processing systems and are well known in the art. A stack pointer is used to indicate a top of the stack, and a stack counter is used to determine how many entries in the stack are valid and when the stack is empty or full. Instruction operands and/or data are added to the "top" of the stack with a "push" operation, and the instruction operands and/or data are removed from the top of the stack with a "pop" operation. In addition to the hardware stack, a stack may also be emulated in a random access memory (RAM). The emulated stack uses a global address register as the stack pointer.

The hardware stack is typically very fast, but the hardware stack is relatively small and may be too small for some applications. On the other hand, an emulated stack may have almost unlimited size, but is too slow for some digital signal processing applications that include, for example, a DO instruction, a JSR (jump to subroutine) instruction, or a RTS (return from subroutine) instruction. The hardware stack is typically much faster than an emulated stack.

Instructions are usually written in a high-level programming language such as C. A compiler program translates the high-level programming language to machine language. The particular hardware limitations of the data processing system have to programmed into the compiler. For example, if the hardware stack of the data processing system is not large enough, the program may be terminated, or the compiler may not even use the hardware stack. Instead, the compiler may "build" an emulated stack. In addition, the compiler may not know if, or how many, nested DO loops exist, which may also cause the compiler to abandon the hardware stack, or even to terminate the program. To maximize speed, it is important that the compiler stay within the hardware stack while executing instructions. One way to stay within the hardware stack is to limit the number of instructions that use the stack to less than the number of total entries in the hardware stack. However, when using, for example, a C compiler, the number of instructions in the program cannot be limited by the programmer.

In some prior art systems, a stack is split into sectors. Each time the program jumps to a subroutine, the stack "rotates", and a new sector is available. However, when all of the sectors are used and a new sector is needed, an entire sector is saved into memory. A problem with saving sectors into memory is that the valuable memory space may be used inefficiently. In addition, the program must be stopped for a relatively long period of time while a new sector is being saved into memory.

### Summary of the Invention

Accordingly, there is provided, in one form, a data processing system having a hardware stack, a stack counter, and control logic. The hardware stack stores N entries of binary information on a last in, first out basis, where N is an integer. The stack counter is coupled to the hardware stack and counts how many of the N entries are full. The control logic is coupled to the hardware stack and to the stack counter, and detects when a predetermined number of the N entries are full. When the predetermined number of the N entries are full, a first entry is moved from the hardware stack to a memory extension stack. Also, the control logic detects when a predetermined number of the N entries are empty. When the predetermined number of the N entries are empty, a second entry is moved from the memory extension stack to the hardware stack.

In another embodiment, a data processing system has a hardware stack and a stack counter, and includes a method for performing a push operation of the hardware stack, the method having the steps of incrementing a value in the stack counter, and monitoring the value in the stack counter, if the value in the stack counter is less than a predetermined value, moving an entry in the hardware stack to a memory extension stack, and if the value in the stack counter is greater than or equal to the predetermined value, moving an entry from the hardware stack.

These and other features and advantages will be more clearly understood from the following detailed description taken in conjunction with the accompanying drawings.

### Brief Description of the Drawings

FIG. 1 illustrates in block diagram form, a data processing system in accordance with the present invention.

FIG. 2 illustrates in block diagram form, a portion of the program control unit of FIG. 1.

FIG. 3 illustrates in flow chart form, a push operation in accordance with the present invention.

FIG. 4 illustrates in flow chart form, a pop operation in accordance with the present invention.

FIG. 5 illustrates in block diagram form, the operating mode register of FIG. 2.

### Description of a Preferred Embodiment

Generally, the present invention provides a memory extension stack formed within a selected random access memory location in a data processing system. The memory extension stack is enabled when a hardware stack in the data processing system is almost full or almost empty. When the hardware stack is almost full, an entry from a bottom of the hardware stack is moved to the memory extension stack by inserting a move instruction into a program being executed. When the hardware stack is almost empty, an entry from the memory extension stack is moved to the bottom of the hardware stack by inserting a move instruction into the program. The move instruction is inserted automatically into the program as if a user wrote the move instruction. This keeps the program running in the hardware stack to take advantage of the hardware stack's greater speed, while increasing the effective size of the hardware stack, yet still allowing for effective use of the available memory space.

The terms "assert" and "negate" will be used when referring to the rendering of a signal, status bit, or similar apparatus into its logically true or logically false state, respectively. If the logically true state is a digital logic level one, the logically false state will be a digital logic level zero. And if the logically true state is a digital logic level zero, the logically false state will be a digital logic level one. The term "bus" will be used to refer to a plurality of signals which may be used to transfer one or more various types of information, such as data, addresses, control, or status.

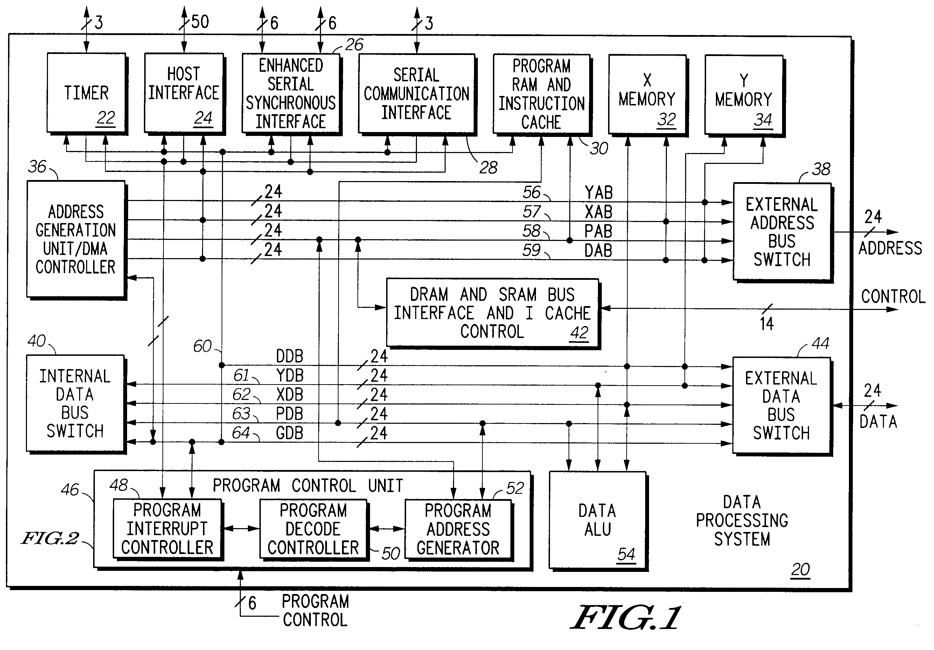

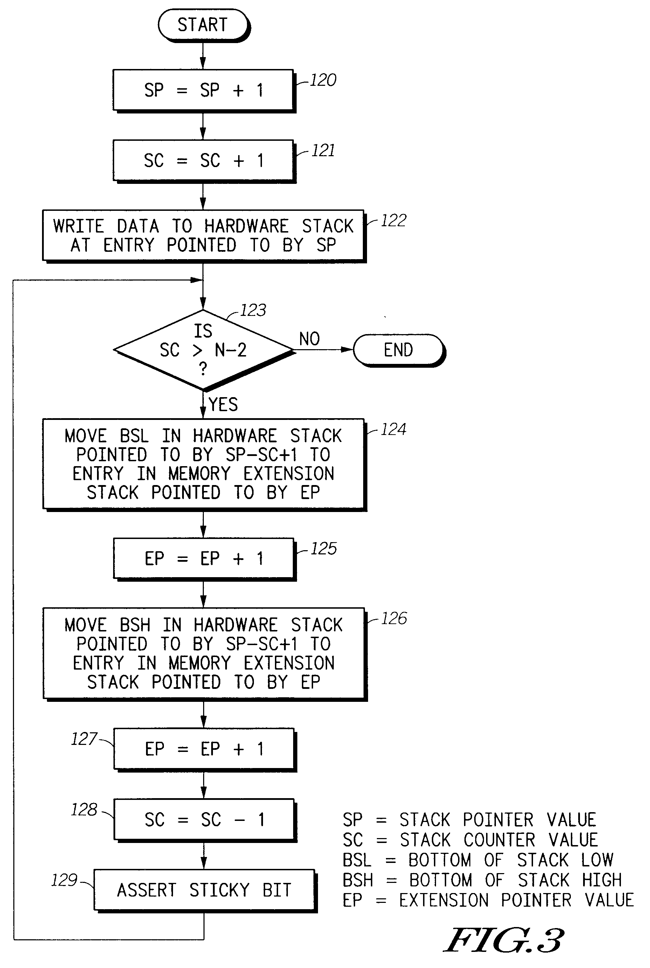

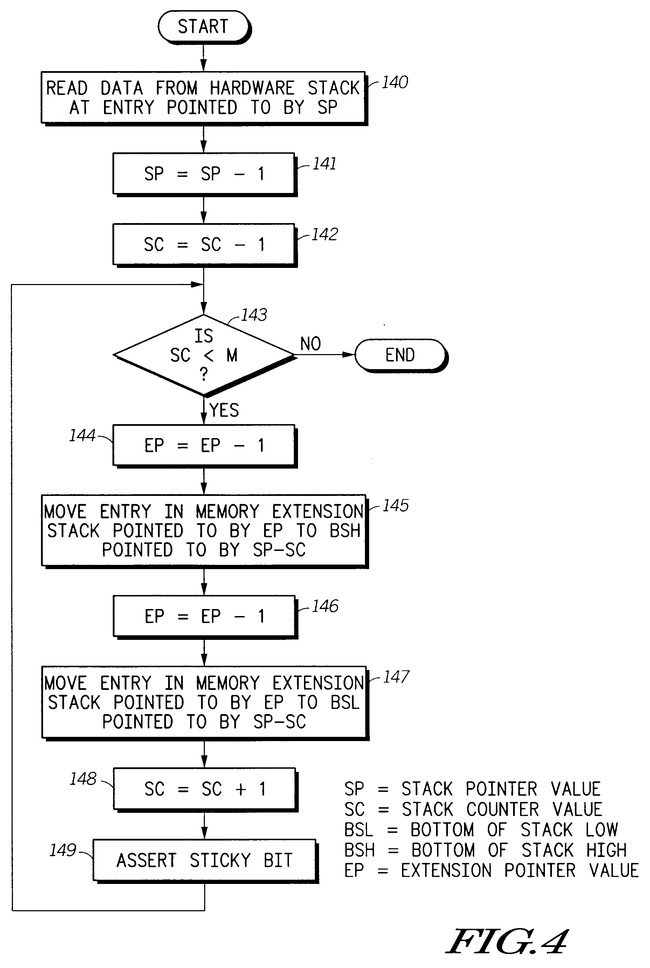

The present invention can be more fully described with reference to FIGs. 1 - 5. Each block illustrated in FIGs. 1, 2, and 5 represents circuitry. Each block illustrated in FIGs. 3 and 4 represents one or more steps in a flow chart. FIG. 1 illustrates in block diagram form, data processing system 20 in accordance with the present invention. In the embodiment illustrated in FIG. 1, data processing system 20 is a digital signal processor (DSP) and is located on a single integrated circuit. In other embodiments, data processing system 20 may be, for example, a microcomputer or a microprocessor. Data processing system 20 includes timer 22, host interface 24, enhanced serial synchronous interface (ESSI) 26, serial asynchronous interface (SCI) 28, program RAM (random access memory) and instruction cache 30, X memory 32, Y memory 34, address generation unit/direct memory access (DMA) controller 36, external address bus switch 38, internal data bus switch 40, DRAM (dynamic random access memory) and SRAM (static random access memory) bus interface and instruction cache control 42, external data bus switch 44, program control unit (PCU) 46, and data arithmetic unit (ALU) 54. Program control unit 46 includes program interrupt controller 48, program decode controller 50, and program address generator 52.

Address bus 56, labeled "YAB", address bus 57, labeled "XAB", program address bus 58, labeled "PAB", and address bus 59, labeled "DAB", are coupled between address generation unit/DMA controller 36 and external address bus switch 38. Data bus 60, labeled "DDB", is coupled between host interface 24 and external data bus switch 44. Data bus 61, labeled "YDB", data bus 62, labeled "XDB", program data bus 63, labeled "PDB", and program data bus 64, labeled "GDB" are coupled between internal data bus switch 40 and external data bus switch 44.

Timer 22 includes three timers that can use internal or external timing, and can interrupt data processing system 20 or signal an external device. In addition, timer 22 can be used to signal a DMA transfer after a specified number of events have occurred. Each of the three timers is coupled to a single bi-directional pin or terminal. In addition, each timer of timer 22 is coupled to bus 57, bus 59, program interrupt controller 48, and to bus 60.

Host interface 24 provides a bi-directional interface for communications between data processing system 20 and another device such as a microcomputer, microprocessor, or DMA controller. Also, host interface 24 is bi-directionally coupled to external data bus switch 44 via bus 60, bi-directionally coupled to global data bus 64, to program interrupt controller 48, to address generation unit/DMA controller 36, and to external address bus switch 38 via buses 57 and 59. In addition, host interface 24 is bi-directionally coupled to 50 external pins or terminals for bi-directional data transfers, address register selections, and control communications from a host processor.

Enhanced serial synchronous interface (ESSI) 26 is coupled to 12 bi-directional external pins to provide serial communication with external serial devices including, for example, one or more industry standard codecs, DSPs (digital signal processors), or microprocessors. ESSI 26 also has terminals coupled to bus 57, bus 59, and bus 60.

Serial communication interface (SCI) 28 is coupled to 3 bi-directional external pins for providing serial communication with external devices. SCI 28 also has terminals coupled to bus 57, bus 59, and bus 60.

The embodiment of data processing system 20, illustrated in FIG. 1, has three memory spaces: program RAM and instruction cache 30, X memory 32, and Y memory 34. In other embodiments, there may be more or fewer memory spaces. Program RAM and instruction cache 30 are coupled to address bus 58 and to data bus 63. X memory 32 is coupled to address bus 57, address bus 59, data bus 60, and to data bus 62. Y memory 34 is coupled to address bus 56, address bus 59, data bus 60, and to data bus 61.

Address generation unit/DMA controller 36 is coupled to address buses 56, 57, 58, and 59. Address generation unit/DMA controller 36 provides memory addresses to timer 22, host interface 24, ESSI 26, SCI 28, program RAM and instruction cache 30, X memory 32, Y memory 34, external address bus switch 38, and to DRAM and SRAM bus interface and instruction cache control 42. In a preferred embodiment, the DMA controller has six channels.

DRAM and SRAM bus interface and instruction cache 42 is coupled to program address bus 58 and to 14 bi-directional external pins. The instruction cache of DRAM and SRAM bus interface and instruction cache 42 functions as a buffer memory between external main memory (not shown) and program control unit 46. The instruction cache stores program instructions that are frequently used. An increase in performance may result when instruction words required by a program are available in the cache, because the time required to access a memory location is eliminated.

Internal data bus switch 40 is coupled to data bus 60, data bus 61, data bus 62, program data bus 63, and to global data bus 64. External data bus switch 44 is coupled to internal data bus switch 40 via data bus 60, data bus 61, data bus 62, program data bus 63, and to global data bus 64. In addition, external data bus switch 44 is coupled to timer 22, host interface 24, ESSI 26, and SCI 28 via data bus 60. Internal data bus switch 40 is used for transfers between buses. Any two buses can be connected together through internal data bus switch 40. External address bus switch 38 and external data bus switch 44 couple external buses (not shown) to any internal address bus and to any internal data bus, respectively.

In program control unit 46, program interrupt controller 48 arbitrates among interrupt requests, and is coupled to timer 22, host interface 24, ESSI 26, and SCI 28. Also, program interrupt controller 48 is bi-directionally coupled to global data bus 64 and to program decode controller 50. Program decode controller 50 decodes each 24-bit instruction and is bi-directionally coupled to program interrupt controller 48 and to program address generator 52. Program address generator 52 contains all of the hardware needed for program address generation, system stack, and loop control. In addition, program address generator 52 is coupled to program address bus 58 and to program data bus 63.

Data arithmetic logic unit (ALU) 54 is coupled to program data bus 63, data bus 61, and to data bus 62. Data ALU 54 performs all of the arithmetic and logical operations on data operands. Data ALU 54 contains registers which may be read or written over by way of buses 61 and 62. Data ALU 54 is also coupled to bus 63 and to bus 60.

Clock generator circuits (not shown) provide clock signals to all of the blocks shown in FIG. 1. There is also test circuitry in data processing system 20 that is not shown in FIG. 1.

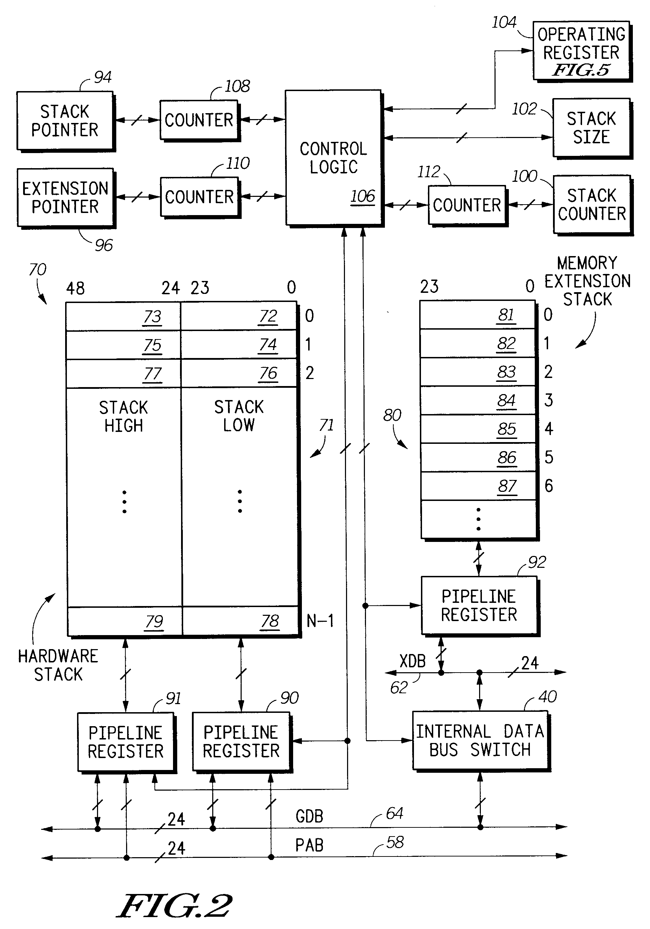

FIG. 2 illustrates in block diagram form, portion 70 of program control unit 46 of FIG. 1. Portion 70 is located generally within program address generator 52, and includes hardware stack 71, pipeline registers 90, 91, and 92, control logic 106, stack pointer register bit field 94, extension pointer register bit field 96, operating mode register 104, stack size register bit field 102, stack counter register bit field 100, and counters 108, 110, and 112. Hardware stack 71 includes N entries, where N is an integer. Each of the N entries includes two twenty-four bit registers for storing binary information. For example, entry 0 includes registers 72 and 73 and is the bottom of hardware stack 71, entry 1 includes registers 74 and 75, entry 2 includes registers 76 and 77, and entry N-1 includes registers 78 and 79 and is the top of hardware stack 71. Registers 73, 75, 77, and 79 form "STACK HIGH" bits of hardware stack 71, and registers 72, 74, 76, and 78 form "STACK LOW" bits of hardware stack 71. Information stored within hardware stack 71 may include program instructions or data. However, the nature of the information stored in hardware stack 71 is not important for purposes of describing the invention, and may include instructions, data, or both.

Memory extension stack 80 is formed within a selected memory location in data processing system 20 when the memory extension stack mode is enabled and hardware stack 71 is almost full. For example, memory extension stack 80 may be formed in either X memory 32 or Y memory 34, or in any other available memory space of data processing system 20. For purposes of illustration, memory extension stack 80 includes 24-bit entries 81 - 87, numbered 0 through 6, respectively. In other embodiments, each entry in memory extension stack 80 may include more or fewer than 24 bits. Potentially, the number of entries in memory extension stack 80 is limited only by the size of the available memory space.

Control logic 106 is bi-directionally coupled to counters 108, 110, and 112. Counter 108 is bi-directionally coupled to stack pointer bit field 94, and is used to increment or decrement stack pointer bit field 94 by one. Counter 110 is bi-directionally coupled to extension pointer bit field 96, and is used to increment or decrement extension pointer bit field 96 by one. Counter 112 is bi-directionally coupled to stack counter bit field 100, and is used to increment or decrement stack counter bit field 100 by one. Control logic 106 is also bi-directionally coupled to stack size bit field 102, to pipeline registers 90 - 92, and to operating mode register 104. Control logic 106 controls the operation of portion 70 including the memory extension stack mode.

Stack pointer register bit field 94, extension pointer register bit field 96, operating mode register 104, stack size register bit field 102, and stack counter register bit field 100 are all part of a programmer's model of data processing system 20. In data processing system 20, stack pointer register bit field 94 is located in a stack pointer register have 24 bits. Stack pointer register bit field 94 is referenced implicitly by some instructions, such as a DO instruction or a jump instruction. A value in stack pointer register bit field 94 is used to point to the last used location in hardware stack 71, or in other words, to the top of the stack.

Extension pointer register bit field 96 is located in a 24-bit register. Extension pointer register bit field 96 is referenced implicitly by some instructions, such as a DO instruction or a JSR instruction, or directly by a move instruction. A value in extension pointer register bit field 96 points to a location in memory extension stack 80 whenever move operations to or from memory extension stack 80 are needed.

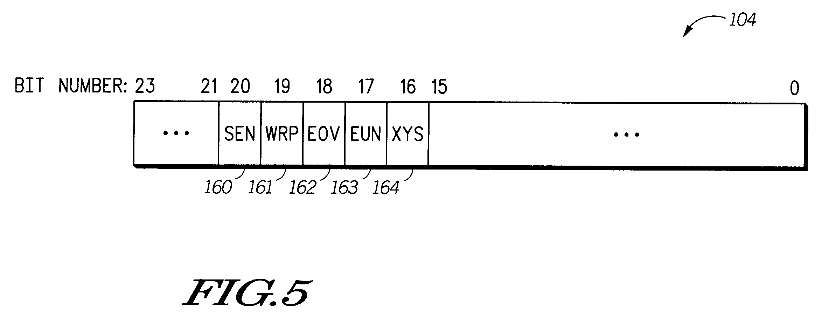

Sticky bit 161 is included in operating mode register 104, and is illustrated in FIG. 5. Sticky bit 161 is asserted whenever memory extension stack 80 has been accessed. Sticky bit 161 is useful as an aid to a programmer during program development, to allow the programmer to know when memory extension stack 80 is being used. A "sticky bit" is commonly used in data processing, and is sometimes called a "wrap bit".

Stack size register bit field 102 is located in a 24-bit register and stores a value to determine the size of the hardware stack when the stack extension is enabled. Stack size register bit field 102 is also used to generate an overflow flag in operating mode register 104 when the value in stack pointer register bit field 94 reaches the value in stack size register bit field 102.

Stack counter register bit field 100 uses 5 bits, is included in a 5-bit register, and monitors how many entries are actually used in hardware stack 71. Operating mode register 104 contains a stack extension enable bit, sticky bit 161, the stack extension overflow flag, a stack extension underflow flag, and a stack extension space select bit. Operating mode register 104 will be discussed later in the discussion of FIG. 5.

Pipeline registers 90 and 91 are coupled between hardware stack 71 and buses 58 and 64. Pipeline register 92 is coupled between memory extension stack 80 and bus 62. Pipeline registers 90 - 92 are included to facilitate pipelining in data processing system 20 and may not be included in other embodiments. Note that pipeline registers 90 - 92 are not included in the programmer's model for data processing system 20. As discussed above, any two buses of buses 61, 62, 63, or 64 can be connected together through internal data bus switch 40. Internal data bus switch 40 is illustrated again in FIG. 2, coupled to bus 64, to aid in explaining the operation of the memory extension stack. The operation of the memory extension stack will be discussed below with the discussion of the flow charts of FIGs. 3 and 4.

FIG. 3 illustrates in flow chart form, the steps required to perform a push operation of hardware stack 71 utilizing memory extension stack 80 in accordance with an embodiment of the present invention. Diamond-shaped box 123 represents a decision step, and rectangular boxes 120, 121, 122, 123, 124, 125, 126, 127, 128, and 129 represent steps which are performed in the push operation.

When data is pushed onto hardware stack 71 by an explicit instruction, such as MOVE, or by an implicit instruction, such as jump to subroutine, the stack pointer and the stack counter are first incremented, and then data is written to the new stack pointer location. When the value in the stack counter register bit field reaches a predetermined number indicating that hardware stack 71 is almost full, instead of writing to the hardware stack, the program halts for two cycles and executes two special moves from hardware stack 71 to memory extension stack 80.

Referring to both FIGs. 2 and 3, to begin a push operation, at step 120, a value in stack pointer register bit field 94 is incremented by one by counter 108. At step 121, a value in stack counter register bit field 94 is incremented by one by counter 112. At step 122, data is written to a location in hardware stack 71 that is pointed to by the value SP. At decision step 123, it is determined if hardware stack 71 is almost full. In a preferred embodiment, "almost full" means having only two empty, or unused, entries in hardware stack 71 as indicated by the value in stack counter register bit field 100 being greater than N-2, where N is an integer representing the total number of entries of hardware stack 71. In a preferred embodiment, N is equal to 16. In other embodiments, "almost full" may be more or less than two empty entries. Note that an entry may not actually be empty, but simply made available to be written over with different information. If the value in stack counter bit field 100 is less than or equal to N-2, the "NO" path is taken from step 123, and the access to hardware stack 71 is finished. If the value in stack counter register bit field 100 is greater than N-2, the "YES" path is taken from step 123 to step 124.

At step 124 data is moved from a "bottom" entry of the "STACK LOW" side of hardware stack 71 as defined by SP - SC + 1, where SP is the value in stack pointer register bit field 94 and SC is the value in stack counter register bit field 100. Since 48 bits are being moved from an entry in hardware stack 71 to memory extension stack 80, and each entry of memory extension stack includes 24 bits, two move operations are required. The data at the bottom of the "STACK LOW" side is moved to memory extension stack 80, which is a designated location in a RAM, such as X memory 32 or Y memory 34 (FIG. 1). The value in extension pointer register bit field 96 points at the location in memory extension stack 80 selected to receive the data. At step 125, the value of extension pointer bit field 96 is incremented. At step 126, data is moved from the bottom entry from the "STACK HIGH" side of hardware stack 71. The data at the bottom "STACK HIGH" side is moved to the next location of memory extension stack 80. The value in extension pointer register bit field 96 points at the location in memory extension stack 80 selected to receive the data. At step 127, the value in extension pointer register bit field 96 is again incremented by one. Value EP in extension pointer register bit field 96 is incremented by one after each move. At step 128, the value in stack counter register bit field 100 is decremented by one.

At step 129, sticky bit 161 is asserted to record that an access to memory extension stack 80 has occurred, unless sticky bit 161 was already asserted by a previous access to memory extension stack 80. As stated above, when the memory extension stack mode is enabled, a program is stopped for 2 cycles in order to move two words from or to hardware stack 71. The 2 additional cycles may cause a result to come too late in some applications. A programmer developing an application may need to know the latest time a result can be expected in a time critical operation. For example, a DO loop may be a critical operation. During program development, the programmer can check sticky bit 161 to see if it has been asserted inside of a DO loop. If stick bit 161 has been asserted, there were at least two moves inserted by control logic 106 to support a stack extension.

Because data processing system 20 is pipelined, an additional push may be executed, and the value in stack counter register bit field 100 may be incremented again, before it is detected by control logic 106. In this case, two entries are moved from hardware stack 71 to memory extension stack 80, requiring a total of 4 move instructions. By always keeping at least two entries free, a DO instruction will be executed correctly. Therefore, a return to decision step 123 is made. At decision step 123, the value in stack counter register bit field 100 is rechecked. If SC is still greater than to N-2, the "YES" path is taken from step 123 to step 124, and step 124 through step 129 is repeated as described above. When the value in stack counter register bit field 100 is less than N-2, the "NO" path is taken from step 129, indicating that at least two entries of hardware stack 71 are empty.

As an example, if SP equals 17, SC equals 15, and EP equals 4 (entry 85 of memory extension stack 80), the bottom of hardware stack 71 is at entry 17 - 15 + 1 = 3. Two move operations are required to move the contents of registers 74 and 75 to memory extension stack 80. The first move operation moves the contents of register 74 to entry 85 in memory extension stack 80. Value EP is incremented to 5, and the contents of register 75 are moved to entry 86 of memory extension stack 80. Value EP is incremented to 6, and the contents of register 75 are moved to entry 86 of memory extension stack 80.

FIG. 4 illustrates in flow chart form, the steps required to perform a pop operation of hardware stack 71 when memory extension stack 80 is being utilized in accordance with an embodiment of the present invention. Diamond-shaped box 143 represents a decision step, and rectangular boxes 140, 141, 142, 144, 145, 146, 147, 148, and 149 represent steps which are performed in the pop operation.

When data is popped from hardware stack 71 by an explicit instruction such as a MOVE instruction, or by an implicit operation such as an RTS instruction, the data is read from the stack pointer location and the stack pointer and the stack counter are then decremented. When the value in stack counter register bit field 100 reaches a predetermined number indicating that hardware stack 71 is "almost empty", instead of reading from hardware stack 71, the program executes two special moves from selected locations in memory extension stack 80 to hardware stack 71.

Referring to both FIGs. 2 and 4, to begin a pop operation, at step 143, data is read from a location in hardware stack 71 that is pointed to by the value SP in stack pointer register bit field 94. At step 141, a value in stack pointer register bit field 94 is decremented by one by counter 108. At step 142, a value in stack counter register bit field 94 is decremented by one by counter 112. At decision step 143, it is determined if hardware stack 71 is almost empty. In a preferred embodiment, "almost empty" means that only two entries of hardware stack 71 are being used. When SC is less to M, hardware stack 71 is almost empty. M is an integer less than N that defines "almost empty". In a preferred embodiment, N is equal to 16, and M is equal to 2. In other embodiments, "almost empty" may be more or less than two used entries. If the value in stack counter register bit field 100 is greater than or equal to M, the "NO" path is taken from step 143 and the pop operation is complete. If the value in stack counter register bit field 100 is less than M, the "YES" path is taken from step 143 to step 144.

At step 144, the value of extension pointer register bit field 96 is decremented. At step 145 data is moved to a "bottom" entry of the STACK HIGH side of hardware stack 71 as pointed to by SP - SC, where SP is the value in stack pointer register bit field 94 and SC is the value in stack counter register bit field 100. Since 24 bits are being moved from an entry in memory extension stack 80 to half of an entry in 48-bit wide hardware stack 71, two move operations are required. The data at the bottom of the STACK HIGH side is moved to hardware stack 71. The value in extension pointer register bit field 96 points at the location in memory extension stack 80 that holds the entry to be transferred. At step 146, the value of extension pointer register bit field 96 is again decremented by one. At step 147, data is moved to the bottom entry of the STACK LOW side of hardware stack 71 from the location of memory extension stack 80 pointed to by value EP. At step 148, the value in stack counter register bit field 100 is incremented by one. At step 149, sticky bit 161 is asserted to record that an access to memory extension stack 80 has occurred, unless sticky bit 161 was already asserted by a previous access to memory extension stack 80.

Because data processing system 20 is pipelined, another pop may be executed and the value in stack counter register bit field 100 may be decremented again before it is detected by control logic 106. In this case, two entries are moved from memory extension stack 80 to hardware stack 71, requiring a total of 4 move operations. At least two entries are always kept full in order to execute an end-of-DO operation. In an end of DO operation, two entries are popped from hardware stack 71. Therefore, after step 149, a return to decision step 143 is made and the value in stack counter bit field 100 is rechecked. If SC is greater than or equal to M, the "NO" path is taken from step 143 and the pop operation is complete. When the value in stack counter register bit field 100 is less than M, the "YES" path is taken from step 143 and steps 144 through 149 are repeated.

As an example, if SP equals 3, SC equals 1, and EP equals 4 (pointing to entry 85), the bottom of hardware stack 71 is at entry 3 - 1 = 2. Two move operations are required to move the contents of entries 85 and 84 to entry 2 (registers 77 and 76) of hardware stack 71. The first move operation moves the contents of register 85 to register 77 of entry 85. EP is decremented to 3 (pointing to entry 84), and the contents of entry 84 are moved to register 76 of entry 2 of hardware stack 71.

FIG. 5 illustrates in block diagram form, operating mode register 104 of portion 70 of FIG. 2. Operating mode register 104 includes bits 160 - 164. Stack enable bit 160, labeled "SEN", enables the memory extension stack mode when it is asserted, and disables the memory extension stack mode when it is negated. Bit 160 is negated by a hardware reset.

Sticky bit 161, labeled "WRP", is asserted when an entry is moved to or from memory extension stack 80. Sticky bit 161 may be used during debugging of a software application program as a means of evaluating and increasing the speed of the software implemented algorithms. The only way to clear a "sticky bit" is by hardware reset or by an explicit move operation to operating mode register 104.

Bit 162, labeled "EOV" is asserted when an overflow of hardware stack 71 occurs when the memory extension stack mode is enabled (bit 160 is asserted). Extended hardware stack overflow is recognized when a push operation is requested when SP is equal to the value in stack size register 102. Bit 162 is also a sticky bit, and causes a stack error exception. Bit 162 is cleared by hardware reset or by an explicit move operation to operating mode register 104.

Bit 163, labeled "EUN", is asserted when a stack underflow occurs in hardware stack 71 when hardware stack 71 is operating in memory extension stack mode (bit 160 is asserted). Stack underflow is recognized when a pop operation is requested and SP equals 0. Bit 163 is also a sticky bit, and causes a stack error exception. Bit 162 is cleared by hardware reset or by an explicit move operation to operating mode register 104.

Bit 164, labeled "XYS", determines if the memory extension stack is to be mapped into X memory 32 or Y memory 34. If bit 164 is negated, the memory extension stack is mapped into X memory 32, and if bit 164 is asserted, the memory extension stack is mapped into Y memory 34. Bit 164 is cleared by hardware reset.

The memory extension stack of the present invention provides a hardware stack that is, practically speaking, virtually unlimited in size. An application can use the hardware stack to allow the execution of powerful instructions, such as a DO instruction, without being constrained by the size of the hardware stack. The implementation of the memory extension stack only affects the execution of a program by inserting move instructions into the program. When the stack extension feature is enabled, the move instructions are inserted automatically by control logic 106 in order to keep the program operating within hardware stack 71. Entries are moved from memory extension stack 80 to hardware stack 71 only when needed. This keeps the program running in the hardware stack to take advantage of the hardware stack's greater speed, while increasing the effective size of the hardware stack.

While the invention has been described in the context of a preferred embodiment, it will be apparent to those skilled in the art that the present invention may be modified in numerous ways and may assume many embodiments other than that specifically set out and described above. For example, in the illustrated embodiment, two move instructions are inserted in a program to move an entry from hardware stack 71 to memory extension stack 80 because of the particular organization of hardware stack 71. In other embodiments, only one, or more than two, move instructions may be inserted to a program depending on the particular organization of the hardware stack and the memory extension stack. Accordingly, it is intended by the appended claims to cover all modifications of the invention which fall within the true spirit and scope of the invention.

## Claims

1. A data processing system (20), comprising:
a hardware stack (70) for storing N entries of binary information on a last in, first out basis, where N is an integer;
a stack counter (100), coupled to the hardware stack (70), for counting how many of the N entries are full; and
control logic (106), coupled to the hardware stack (70) and to the stack counter (100), for detecting when a predetermined number of the N entries are full, and when the predetermined number of the N entries are full, a first entry is moved from the hardware stack (70) to a memory extension stack (80), the control logic (106) for detecting when a predetermined number of the N entries are empty, and when the predetermined number of the N entries are empty, a second entry is moved from the memory extension stack (80) to the hardware stack (70).

2. A data processing system (20) as in claim 1, wherein the memory extension stack (80) is mapped into a random access memory (32) in the data processing system (20).

3. A data processing system (20) as in claim 1, wherein an entry of the N entries of the hardware stack (70) includes two register bit fields (70, 71), a register bit field of the two register bit fields for storing a predetermined number of bits.

4. A data processing system (20) as in claim 3, wherein the control logic (106) inserts two move instructions into a program to move the entry of the N entries from the hardware stack (70) to the memory extension stack (80) during a push operation of the hardware stack (70).

5. A data processing system (20) as in claim 3, wherein the control logic (106) inserts two move instructions into a program to fill the two register bit fields (70, 71) of the hardware stack (70) from the memory extension stack during a pop operation of the hardware stack (70).

6. In a data processing system (20) having a hardware stack (70) and a stack counter (100), a method for performing a push operation of the hardware stack (70), the method comprising the steps of:
incrementing a value in the stack counter (100); and
monitoring the value in the stack counter (100), if the value in the stack counter (100) is less than a predetermined value, moving an entry in the hardware stack (70) to a memory extension stack (80), and if the value in the stack counter (100) is greater than or equal to the predetermined value, moving an entry from the hardware stack (70).

7. In a data processing system (20) having a hardware stack (70) and a stack counter (100), a method for performing a pop operation of the hardware stack (70), the method comprising the steps of:
decrementing a value in the stack counter (100); and
monitoring the value in the stack counter (100), if the value in the stack counter (100) is less than a predetermined value, moving an entry in a memory extension stack (80) to the hardware stack (70), and if the value in the stack counter (100) is greater than or equal to the predetermined value, moving an entry from the hardware stack (70).

8. The method of claim 7, further comprising a step of setting a sticky bit.

9. A method as in claim 7, further comprising a step of moving the entry in the memory extension stack to a bottom of the hardware stack.

10. A method as in claim 7, further comprising a step of decrementing a value in a stack pointer, where the value in the stack pointer references a top of the hardware stack.
